(19)

**Europäisches Patentamt**
**European Patent Office**
**Office européen des brevets**

(11) **EP 4 571 988 A2**

(12) **EUROPEAN PATENT APPLICATION**

(43) Date of publication:
18.06.2025 Bulletin 2025/25

(21) Application number: 24218468.7

(22) Date of filing: **09.12.2024**

(51) International Patent Classification (IPC):
*H01M 50/403* (2021.01)     *H01M 50/443* (2021.01)
*H01M 50/446* (2021.01)     *H01M 50/451* (2021.01)

(52) Cooperative Patent Classification (CPC):
**H01M 50/403; H01M 50/443; H01M 50/446;**
**H01M 50/451;** H01M 50/489

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.12.2023  KR 20230179244**

(71) Applicants:
• SK Innovation Co., Ltd.
  Seoul 03188 (KR)
• SK ie technology Co., Ltd.
  Jongno-gu
  Seoul
  03188 (KR)

(72) Inventors:
• KIM, Yun Bong
  Daejeon 34124 (KR)
• JI, Sang Yoon
  Daejeon 34124 (KR)
• JEUN, Jeong Hoon
  Daejeon 34124 (KR)
• CHOI, Je Nam
  Daejeon 34124 (KR)

(74) Representative: **Prüfer & Partner mbB**
**Patentanwälte · Rechtsanwälte**
**Sohnckestraße 12**
**81479 München (DE)**

(54) **SEPARATOR AND ELECTROCHEMICAL DEVICE COMPRISING THE SAME, AND METHOD FOR PRODUCING THE SAME**

(57)     Provided is a separator for an electrochemical device having an intensity ratio of peaks corresponding to a (020) plane and a (110) plane in an X-ray diffraction (XRD) analysis graph of 2.6 to 5.7. The separator according to an example embodiment has excellent stability at high temperature by satisfying the peak intensity ratio of the XRD analysis graph.

Fig. 1

100

20

10

**Description**

**TECHNICAL FIELD**

The following disclosure relates to a separator and an electrochemical device comprising the same.

**BACKGROUND**

A separator of a battery in an electrochemical device is very important for improving stability, lifespan, and performance of the battery. The main function of the separator is to provide an ion migration path in a battery and prevent a physical contact between a negative electrode and a positive electrode. Hence, a battery having excellent performance may be manufactured by improving the characteristics of the separator.

In order to improve the characteristics of the separator used in the battery, a multilayer separator is formed by laminating a porous polymer such as polyolefin-based or polypropylene-based polymers, or a separator having a coating layer formed by mixing a binder and inorganic particles on a porous polymer used as a substrate. The multilayer separator or the coating layer in which a binder and optional other components are mixed may improve various characteristics of a separator as compared with a single-layer separator, but the thickness of the separator may be increased, and the performance of a battery may be rather degraded due to low permeability, decreased wettability, and reduced impregnation. In order to solve the problems as such, research is in progress for manufacturing a separator which has various characteristics sufficiently appropriate for the separator of a battery, and which is thin and satisfies mechanical and chemical stability to improve battery performance.

**SUMMARY**

An embodiment of the present disclosure is directed to providing a separator having excellent heat resistance.

Another embodiment of the present disclosure is directed to providing an electrochemical device comprising the separator.

In one general aspect, a separator for an electrochemical device comprises: a porous substrate; and an inorganic particle layer comprising inorganic particles on at least one surface of the porous substrate, wherein a peak intensity ratio $I_{020/110}$ represented by the following Equation 1 is 2.6 to 5.7:

$$[\text{Equation 1}]$$

$$I_{020/110} = I(020)/I(110)$$

wherein I(020) and I(110) are intensities of peaks corresponding to a (020) plane and a (110) plane in an X-ray diffraction (XRD) analysis graph.

In the present disclosure, the I(020) parameter may refer to a characteristic and/or observable crystalline peak (showing a certain intensity) in the (020) plane of the XRD analysis, in particular of the peak of the inorganic particles comprised in the inorganic particle layer. Further, the I(110) parameter may refer to a characteristic and/or observable crystalline peak (showing a certain intensity) in the (110) plane of the XRD analysis, in particular of the peak of the polymer comprised in the porous substrate.

In another general aspect, an electrochemical device comprises the separator according to the aforementioned general aspect and according to embodiments thereof further exemplified below.

In another general aspect, the present disclosure provides a method for producing a separator and specifically for the manufacture of an electrochemical device, such as a secondary battery.

Other features and aspects will be apparent from the following detailed description, the drawings, and the claims.

**BRIEF DESCRIPTION OF THE DRAWINGS**

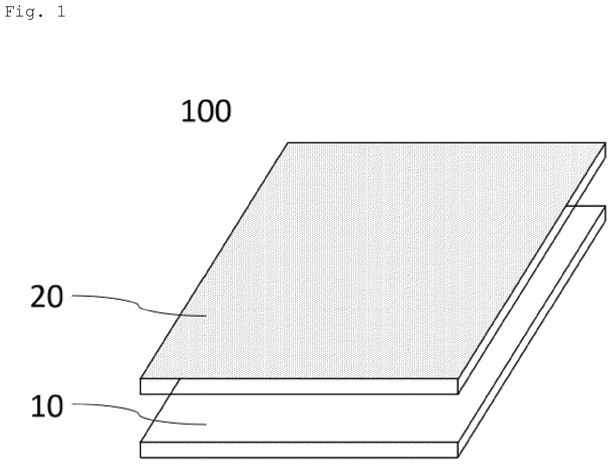

FIG.1 is a schematic structure of a separator according to one embodiment. 100: Separator; 10: Porous substrate; 20: Inorganic particle layer.

**DETAILED DESCRIPTION OF EMBODIMENTS**

Since the embodiments described in the present specification may be modified in many different forms, the technology according to an example embodiment is not limited to the embodiments set forth herein. Furthermore, throughout the specification, unless otherwise particularly stated, the word "comprising", "comprising", "containing", "being provided with", or "having" does not mean the exclusion of any other constituent element, but rather means further inclusion of other constituent elements, and elements, materials, or processes which are not further listed are not excluded.

The numerical range used in the present specification comprises all values within the range comprising the lower limit and the upper limit, increments logically derived in a form and spanning in a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also comprised in the defined numerical range.

Hereinafter, unless otherwise particularly defined in the present specification, "about" may be considered as a value within 30%, 25%, 20%, 15%, 10%, 5%, 3%, 2%, 1%, or 0.5% of a stated value.

Hereinafter, unless otherwise particularly defined in the present specification, "(meth)acryl" refers to acryl and/or methacryl.

Unless otherwise defined in the present specification, an average particle diameter of inorganic particles refers to a $D_{50}$ value.

Unless otherwise defined in the present specification, when it is said that a part such as a layer, a film, a thin film, a region, or a plate is "on" or "above" the other part, the part may be "directly on" the other part, and also, another part may intervene therebetween.

Unless otherwise defined in the present specification, a "polymer" refers to a molecule having a relatively high molecular weight, and its structure may comprise multiple repetition of a unit derived from a low molecular weight molecule. In an embodiment, the polymer may be an alternating copolymer, a block copolymer, a random copolymer, a graft copolymer, a gradient copolymer, a branched copolymer, a crosslinked copolymer, or a copolymer comprising all of them (for example, a polymer comprising more than one monomer). In another embodiment, the polymer may be a homopolymer (for example, a polymer comprising one monomer).

An example embodiment provides a separator which has high heat resistance and allows implementation of excellent battery performance. Specifically, the separator(100) according to an example embodiment comprises an inorganic particle layer(20) comprising inorganic particles on at least one surface of the porous substrate(10), wherein a ratio ($I_{020/110}$) between an intensity ($I(020)$) of a peak corresponding to a (020) plane and an intensity ($I(110)$) of a peak corresponding to a (110) plane, represented by the following Equation 1, in a graph of result of analyzing the separator by X-ray diffraction (XRD) is 2.6 to 5.7. The separator according to an example embodiment was devised by first recognizing the fact that the separator may improve heat resistance of the separator, allow uniform migration of a lithium ion during charge and discharge of a battery comprising the separator, and also, effectively suppress a side reaction problem by moisture, by satisfying the peak intensity ratio.

$$[\text{Equation 1}]$$

$$I_{020/110} = I(020)/I(110)$$

The effect is due to the fact that the peak intensity ratio ($I_{020/110}$) of the separator satisfies 2.6 to 5.7, and is not affected only by the constituent elements of the separator or any specific elements during the manufacturing process of the separator. As confirmed in an example embodiment, since the peak intensity ratio ($I_{020/110}$) of the separator may be implemented by various means comprising various factors such as an average particle diameter or a weight ratio of an inorganic material, and thicknesses of the inorganic particle layer and a porous substrate, the way in which the peak intensity ratio of the separator is implemented is not limited. Specifically, for example, the peak intensity ratio may vary depending on the temperature or pressure of the manufacturing process of inorganic particles, and may vary by the commercial product or the shape of inorganic particles. In addition, it may vary depending on the elongation rate, the copolymerization rate, or the commercial product in the manufacturing step of the porous substrate.

Therefore, whatever manufacturing conditions of the separator is, that is, whatever content and type of a binder, a dispersant, and a lubricant, slurry solid content, rotation speed and/or bead size in a slurry preparation step is/are, whether a smoothing bar is used, whatever drying temperature is, whatever porous substrate is, whatever electrolyte of a battery is, and when the separator comprises an inorganic particle layer, whatever average particle diameter, distribution, or combination of inorganic materials comprised in the inorganic particle layer is, the heat resistance of the separator is excellent and the characteristics (life characteristics, charge and discharge characteristics, and optionally further battery characteristics) of a battery manufactured using the separator are excellent when the peak intensity ratio of the separator of an example embodiment is satisfied.

In an example embodiment, the peak corresponding to the (020) plane may be a peak of inorganic particles comprised in the inorganic particle layer, and/or the peak corresponding to the (110) plane may be the peak of the porous substrate (or of the polymer used for making the porous substrate).

In an example embodiment, the peak of the (020) plane may be a peak shown at $2\theta=14.5°\pm0.5°$, $2\theta=14.5°\pm0.4°$, $2\theta=14.5°\pm0.3°$, $2\theta=14.5°\pm0.2°$, $2\theta=14.5°\pm0.1°$, or $2\theta=14.5°$.

In an example embodiment, the peak of the (110) plane may be a peak shown at $2\theta=21.6°\pm0.5°$, $2\theta=21.6°\pm0.4°$, $2\theta=21.6°\pm0.3°$, $2\theta=21.6°\pm0.2°$, $2\theta=21.6°\pm0.1°$, or $2\theta=21.6°$.

In an independent aspect of the present disclosure and in further embodiments, the peak intensity ratio Ia/Ib in an X-ray diffraction (XRD) measurement of the separator to be 2.6 to 5.7 may be observed generally when Ia is a characteristic peak specific for and corresponding to the inorganic particles comprised in the inorganic particle layer, and Ib is a characteristic peak specific for and corresponding to the polymer comprised in the of the porous substrate, respectively measured using Cu K$\alpha$ radiation.

In an example embodiment, the inorganic particles and their respectively characteristic peak shown in the corresponding plane of the XRD measurement may be one or more selected from the group consisting of:

AlO(OH) (boehmite) peak at $2\theta=14.5°\pm0.5°$, plane (020),
$BaSO_4$ (Barite) peak at $2\theta$ 22.8°$\pm0.5°$, plane (111),
$CeO_2$ (Cerium Dioxide) peak at $2\theta$ 28.55°$\pm0.5°$, plane (111),
MgO (Magnesium Oxide) peak at $2\theta$ 42.8°$\pm0.5°$, plane (200),
CaO (Calcium Oxide) peak at $2\theta$ 37.4°$\pm0.5°$, plane (200),
ZnO (Zinc Oxide) peak at $2\theta$ 36.25°$\pm0.5°$, plane (101),
$Al_2O_3$ (Aluminium Oxide) peak at $2\theta$ 25.6°$\pm0.5°$, plane (012),
$TiO_2$ (Titanium Dioxide)
for the anatase phase peak at $2\theta$ 25.3°$\pm0.5°$, plane (101)
for the rutile phase peak at $2\theta$ 27.4°$\pm0.5°$, plane (110),
$BaTiO_3$ (Barium Titanate) peak at $2\theta$ 31.5°$\pm0.5°$, plane (101) depending on the polymorphic phase,
$HfO_2$ (Hafnium Dioxide) peak at $2\theta$ 28.3°$\pm0.5°$, plane (111) in the monoclinic phase,
$SrTiO_3$ (Strontium Titanate) peak at $2\theta$ 32.4°$\pm0.5°$, plane (110),
$SnO_2$ (Tin Dioxide) peak at $2\theta$ 29.8°$\pm0.5°$, plane (110),
NiO (Nickel Oxide) peak at $2\theta$ 43.3°$\pm0.5°$, plane (200),
$ZrO_2$ (Zirconium Dioxide)
for the monoclinic phase peak at $2\theta$ 27.8°$\pm0.5°$ plane (-111)
for the tetragonal phase peak at $2\theta$ 29.8°$\pm0.5°$ plane (101),
$Y_2O_3$ (Yttrium Oxide) peak at $2\theta$ 29.2°$\pm0.5°$, plane (222) for the cubic phase, and
SiC (Silicon Carbide)
for the 4H polytype peak at $2\theta$ 35.7°$\pm0.5°$, plane (004);
preferably is AlO(OH) (boehmite) peak at $2\theta=14.5°\pm0.5°$ in plane (020).

In an example embodiment, the polymer of the porous substrate and its respectively characteristic peak shown in the corresponding plane of the XRD measurement may be one or more selected from the group consisting of:

polyethylene peak at $2\Theta$ in the range of 21° to 24°, in particular at 21.6°$\pm0.5°$ in plane (110), and
polypropylene peak at $2\Theta$ in the range of 14°$\pm0.5°$ to 14.5°$\pm0.5°$ in plane (110),
in particular is polyethylene peak at $2\Theta$ 21.6°$\pm0.5°$ in plane (110).

In an example embodiment, the peak intensity ratio ($I_{020/110}$) may be 2.7 to 5.7; 2.8 to 5.7; 4.5 to 5.3; 4.5 to 5.1; 4.7 to 5.1; 2.7 to 5.1; 2.6 to 3.0 or 4.0 to 5.7; 2.7 to 3.0 or 4.5 to 5.3; 2.8 or 4.5 to 5.1; 2.6 to 3.0 or 4.5 to 5.1.

In an example embodiment, since the inorganic particle layer may be formed on at least one surface of the porous substrate, the inorganic particle layer may be, for example, formed on any one surface or both surfaces of the porous substrate.

In an example embodiment, the type of inorganic particles comprised in the inorganic particle layer is not particularly limited as long as the inorganic particles are known to be electrochemically stable. For example, any one or more of boehmite, $CeO_2$, MgO, CaO, ZnO, $Al_2O_3$, $TiO_2$, $BaTiO_3$, $HfO_2$, $SrTiO_3$, $SnO_2$, NiO, $ZrO_2$, $Y_2O_3$, and/or SiC may be comprised. Specifically, for example, the inorganic particles may comprise boehmite.

In an example embodiment, an average particle diameter ($D_{50}$) of the inorganic particles may be appropriately selected depending on the experiment conditions and the purpose as long as the peak intensity ratio of the separator according to an example embodiment is satisfied, and is not necessarily limited to a certain range. For example, the average particle diameter of the inorganic particles may be 0.01 um to 10.0 um. Otherwise, it may be 0.01 um to 5.0 um, 0.1 um to 10.0 um, 0.1 um to 5.0 um, 0.1 um to 3.0 um, 0.1 um to 2.0 um, or 0.1 um to 1.5 um.

Otherwise, the inorganic particles may be a mixture of 1, 2, 3, or more types of inorganic particles having different average particle diameters. Such a mixture may be observed to show mono-, di-, tri- or further multi-modal particle size distribution. Such mono-, di-, tri- or multi-modal particle size distribution may preferably be observed in the mixture of inorganic particles before being added to a coating slurry, i.e. when using such two or more types of inorganic particles in terms of size. For example, the inorganic particles may be a mixture of any one or more of first inorganic particles having an average particle diameter of 0.10 um to 0.54 um, 0.10 um to 0.50 um, 0.20 um to 0.40 um, 0.30 um to 0.40 um, or about 0.35 $\mu$m; second inorganic particles having an average particle diameter of 0.55 um to 2.0 um, 0.55 um to 1.5 um, 0.55 um to 1.2 um, 0.60 um to 0.90 $\mu$m, 0.60 um to 0.80 $\mu$m, 0.70 um to 0.80 um, or about 0.75 $\mu$m; and third inorganic particles having an average particle diameter of 0.01 um to 3.0 um, 0.1 um to 2.0 um, or 0.1 um to 1.0 um. For example, the inorganic particles may comprise only the first inorganic particles, the first inorganic particles and the second inorganic particles, or the first inorganic particles and the third inorganic particles. Herein, the first inorganic particles, the second inorganic particles, and the third inorganic particles may be the inorganic particles identical to or different from each other.

In an example embodiment, when inorganic particles having two average particle diameters different from each other are used, though the weight ratio is not particularly limited, they may be, for example, mixed at 20:80 to 80:20, 30:70 to 70:30, 50:50 to 80:20, 70:30, or 50:50. For example, the inorganic particles may comprise the first inorganic particles and the second inorganic particles at a weight ratio of the first inorganic particles over the second inorganic particles of 20:80 to 80:20, 30:70 to 70:30, 50:50 to 80:20, 30:70, 50:50, or 70:30. However, these ratios are only examples It is noted that the first and second inorganic particles may not necessarily be mixed at these weight ratios. Herein, the first inorganic particles and the second inorganic particles may be identical or different type from each other.

In an example embodiment, the inorganic particle layer may further comprise a binder. The binder may be appropriately selected by an ordinary person skilled in the art disclosed in the present application according to the purpose and situation from known binders. In an example embodiment, the binder may comprise a polymer, and, for example, may comprise any one or more selected from the group consisting of ester-based polymers, amide-based polymers, imide-based polymers, acryl-based polymers, acrylamide-based polymers, vinylalcohol-based polymers, fluorine-based polymers, and/or vinylpyrrolidone-based polymers. In an example embodiment, the binder may comprise an acrylamide-based polymer. Otherwise, for example, the binder may comprise a polymer prepared from any one or more monomers of (meth)acrylamide-based monomers, hydroxyl group-containing (meth)acryl-based monomers, and/or polyfunctional (meth)acrylamide-based monomers, and is not limited as long as the binder is used as a binder of the inorganic particle layer in which the inorganic particles formed on the surface of the porous substrate of the separator for a secondary battery are connected to each other by the binder to form pores.

In an example embodiment, a content of the binder may be appropriately adjusted according to the situation and purpose within a range satisfying the average pore diameter range of the separator. For example, the content of the binder may be 0.1 parts by weight to 20.0 parts by weight, 0.1 parts by weight to 15.0 parts by weight, 1.0 part by weight to 10.0 parts by weight, 1.0 part by weight to 5.0 parts by weight, or about 3.0 parts by weight, with respect to 100 parts by weight of the inorganic particles.

In an example embodiment, the binder (or a polymer comprised in the binder) may have a weight average molecular weight (Mw) of 50,000 g/mol to 2,000,000 g/mol, 50,000 g/mol to 1,000,000 g/mol, 50,000 g/mol to 500,000 g/mol, 50,000 g/mol to 300,000 g/mol, 100,000 g/mol to 300,000 g/mol, or about 280,000 g/mol, but is only an example, and the weight average molecular weight may be appropriately selected according to the experimental conditions as long as the peak intensity ratio of the separator is satisfied. The weight average molecular weight may be measured by gel permeation chromatography (GPC).

In an example embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate, polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, teflon, and/or polytetrafluoroethylene, and any two or more of them may be used.

In an example embodiment, the thickness of the porous substrate is not particularly limited, and for example, may be 1 $\mu$m to 100 um, 1 um to 50 um, 1 um to 30 um, 5 um to 20 $\mu$m, or about 9 um or 11 um.

In an example embodiment, the thickness of the inorganic particle layer which may be formed on any one surface of the porous substrate may be, for example, 0.1 um to 10.0 um, 0.1 um to 5.0 um, 0.5 um to 3.0 um, 1.0 um to 3.0 um, or about 1.5 um, 2.0 um, or 3.0 um. In the case in which the inorganic particle layer is formed on both surfaces of the porous substrate, the thickness may be 0.2 um to 15.0 um, 0.3 um to 10.0 um, 1.0 um to 8.0 um, 2.0 um to 6.0 $\mu$m, or about 3.0 um, 4.0 um, or 6.0 um.

In an example embodiment, the separator may have both shrinkage rates in the machine direction (MD) and the transverse direction (TD) of 5.0% or less, after being allowed to stand at 130°C for 60 minutes, and the lower limit may be 0.5% or 0. Specifically, the shrinkage may be 0.5% to 5.0%, 1.0% to 4.0%, or 1.0% to 3.0%.

In an example embodiment, the separator may have both shrinkage rates in the machine direction (MD) and the transverse direction (TD) of 5.0% or less, after being allowed to stand at 150°C for 60 minutes, and the lower limit may be 0.5% or 0. Specifically, the shrinkage may be 0.5% to 5.0%, 1.0% to 4.0%, or 1.0% to 3.0%.

In an example embodiment, the porous substrate comprised in the separator may have an air permeability (Gurley permeability) measured in accordance with ASTM D726 of 10 s/100 cc to 300 s/100 cc, 50 s/100 cc to 200 s/100 cc, 60 s/100 cc to 160 s/100 cc, or 70 s/100 cc to 150 s/100 cc, but the air permeability is not particularly limited as long as the peak intensity ratio of the separator according to an example embodiment is implemented.

In an example embodiment, the separator may have a moisture content of 1000 ppm or less, and the moisture content may be a value obtained by measuring a moisture amount occurring by heating a specimen at 150°C according to a Karl Fischer moisture measurement method using a moisture meter (Metrohm, 917 Coulometer) after collecting 0.3 g of the separator.

Since the separator according to an example embodiment has excellent heat resistance and may have the most preferred moisture content for implementing battery performance by satisfying a peak intensity ratio ($I_{020/110}$) of the XRD analysis of 2.6 to 5.7, the charge and discharge performance and the life characteristics of a battery may be excellently implemented therefrom. When the peak intensity ratio of the separator is not satisfied, the moisture content of the separator is high, and thus, performance degradation may occur due to the side reaction by moisture of a rechargeable battery, or the heat resistance or the battery resistance of the separator is low, so that heat stability and battery performance may not be sufficiently implemented.

The separator according to an example embodiment may be manufactured by preparing a composition for forming an inorganic particle layer comprising inorganic particles; and applying (or coating) the composition for forming an inorganic particle layer on at least one surface of the porous substrate and then drying to form the inorganic particle layer. In addition, in an example embodiment, before forming the inorganic particle layer, surface-treating the porous substrate may be further comprised. The surface treatment may be performed by introducing a polar group to the surface by a corona discharge treatment.

In an example embodiment, a solvent used in the composition for forming an inorganic particle layer is not particularly limited, and when the composition comprises the binder, a solvent which is easy to dissolve or disperse the binder may be selected. For example, water, acetone, ethanol, tetrahydrofuran, methylene chloride, chloroform, cyclohexane, dimethylformamide, and/or N-methyl-2-pyrrolidone may be used.

In an example embodiment, the composition for forming an inorganic particle layer may be a slurry, and a solid content of the slurry may be, for example, 10 wt% to 50 wt%, 10 wt% to 40 wt%, 15 wt% to 30 wt%, 20 wt% to 33 wt%, or about 25 wt%.

In an example embodiment, a method for applying or coating the composition for forming an inorganic particle layer on the porous substrate is not particularly limited, but for example, roll coating, spin coating, dip coating, bar coating, die coating, slit coating, or inkjet printing may be used.

In an example embodiment, the drying may be performed by drying by warm air, hot air, or low-humidity air, vacuum drying, irradiation with far infrared rays or electron beams, and the like. The drying temperature is not particularly limited. The drying temperature may be appropriately adjusted depending on the experimental environment or the purpose, and for example, may be 30°C to 120°C, 30°C to 100°C, 50°C to 80°C, 50°C to 70°C, or about 60°C. The drying time is not particularly limited. For example, the drying time but may be 30 seconds to 300 seconds, 60 seconds to 300 seconds, 100 seconds to 300 seconds, 150 seconds to 250 seconds, or about 180 seconds.

As described above, the peak intensity ratio of the separator of an example embodiment may be implemented by various means, and may be adjusted by the size of the inorganic particles, the distribution degree of the inorganic particles, the type and content of the binder, the solid content of the slurry, the preparation conditions of the slurry, the viscosity of the slurry, the drying conditions (temperature, speed), a coating speed, flattening means using a smoothing bar, and the like.

Another example embodiment provides a method for producing a separator, comprising the steps of:

> providing a porous substrate,
> applying a slurry comprising inorganic particles to one or both of the surface (s) of the porous substrate in order to provide inorganic particle layer(s) on one or both sides of the porous substrate, respectively;
> wherein the crystal structures of the inorganic particles in the inorganic particle layer and of the crystal structure of the polymer in the porous substrate of the obtained separator are to satisfy a peak intensity ratio I020/110 represented by the following Equation 1 to be 2.6 to 5.7:

$$[\text{Equation 1}]$$

$$I_{020/110} = I(020)/I(110)$$

wherein I(020) and I(110) are intensities of peaks corresponding to a (020) plane and a (110) plane in an X-ray diffraction (XRD) analysis graph.

In an example embodiment, wherein the manufacturing conditions for obtaining the peak intensity ratio $I_{020/110}$ are selected from one or more of the following conditions, respectively alone or in combination:

type of the porous substrate;
content and type of a binder, of a dispersant, and/or of a lubricant;
solid content of the slurry on the porous substrate;
rotation speed and/or bead size in a slurry preparation step; use or absence of a smoothing bar when applying the slurry;
coating speed;
drying temperature;
type of the electrolyte suitable for a battery;
type of inorganic materials comprised in the inorganic particle layer, selected from: temperature or pressure of the manufacturing process from which the inorganic particles derive, preselection of known or commercial inorganic particle materials, average particle diameter and/or distribution of particle size, and/or weight ratio of different types of inorganic particles;
type and manufacturing conditions of the polymer used for the porous substrate, selected from a preselection of known or commercial polymers, an elongation rate and/or a copolymerization rate in the manufacturing process from which the porous substrate derives; and
thickness of the inorganic particle layer and/or of the porous substrate.

Another example embodiment provides an electrochemical device comprising the separator according to an example embodiment, and the electrochemical device may be a secondary battery or a lithium secondary battery.
Hereinafter, the constituent elements of the secondary battery according to the present disclosure will be further described.

[Positive electrode]

The positive electrode may comprise a positive electrode current collector and a positive electrode mixture layer disposed on at least one surface of the positive electrode current collector.

(Positive electrode current collector)

The positive electrode current collector may comprise stainless steel, nickel, aluminum, titanium, or an alloy thereof. The positive electrode current collector may comprise carbon, nickel, titanium, or aluminum which is surface treated with silver, or stainless steel. A thickness of the positive electrode current collector may be, for example, 10 um to 50 $\mu$m.

(Positive electrode material)

The positive electrode mixture layer may comprise a positive electrode active material. The positive electrode active material may comprise a compound which may reversibly intercalate and deintercalate lithium ions.
For example embodiments, the positive electrode active material may be used without limitation as long as it is a conventionally used positive electrode active material. For example, the positive electrode active material may comprise a lithium-nickel metal oxide. The lithium-nickel metal oxide may further comprise at least one of cobalt (Co), manganese (Mn), and aluminum (Al).
The positive electrode active material may further comprise a coating element or a doping element. For example, the auxiliary elements described above and elements substantially identical or similar thereto may be used as a coating element or a doping element. For example, among the elements described above, a single or a combination of two or more is used as a coating element or a doping element.
For example, the positive electrode active material may comprise a nickel-cobalt-manganese (NCM)-based lithium oxide. An NCM-based lithium oxide having an increased nickel content may be used.
The content of Ni in the NCM-based lithium oxide (for example, the mole fraction of nickel of the total moles of nickel, cobalt, and manganese) may be 0.6 or more, 0.7 or more, or 0.8 or more. In some example embodiment, the content of Ni may be 0.8 to 0.95, 0.82 to 0.95, 0.83 to 0.95, 0.84 to 0.95, 0.85 to 0.95, or 0.88 to 0.95.
In some example embodiments, the positive electrode active material may comprise a lithium cobalt oxide-based active material, a lithium manganese oxide-based active material, a lithium nickel oxide-based active material, or a lithium iron phosphate (LFP)-based active material (for example, $LiFePO_4$).

(Method for manufacturing the positive electrode)

For example, the positive electrode active material may be mixed into the solvent to prepare a positive electrode slurry. After coating the positive electrode current collector with the positive electrode slurry, drying and rolling may be performed to manufacture a positive electrode mixture layer. The coating process may be performed by a method such as gravure coating, slot die coating, multilayer simultaneous die coating, imprinting, doctor blade coating, dip coating, bar coating, and casting, but is not limited thereto. The positive electrode mixture layer may further comprise a binder, and may optionally further comprise a conductive material, a thickener, and the like.

(Positive electrode solvent)

A non-limiting example of the solvent used in the preparation of the positive electrode mixture may comprise N-methyl-2-pyrrolidone (NMP), dimethyl formamide, dimethyl acetamide, N,N-dimethylaminopropylamine, ethylene oxide, tetrahydrofuran, and the like.

(Positive electrode binder)

The binder may comprise polyvinylidene fluoride (PVDF), poly(vinylidene fluoride-co-hexafluoropropylene, polyacrylonitrile, polymethyl methacrylate, acrylonitrile butadiene rubber (NBR), polybutadiene rubber (BR), styrene-butadiene rubber (SBR), and the like. In an example embodiment, a PVDF-based binder may be used as a positive electrode binder.

(Positive electrode conductive material)

The conductive material may be added for increasing conductivity of the positive electrode mixture layer and/or mobility of lithium ions or electrons. For example, the conductive material may comprise carbon-based conductive materials such as graphite, carbon black, acetylene black, ketjen black, graphene, carbon nanotubes, vapor-grown carbon fiber (VGCF), and carbon fiber, and/or metal-based conductive materials comprising tin oxide, titanium oxide, perovskite materials such as $LaSrCoO_3$, $LaSrMnO_3$, but is not limited thereto.

(Positive electrode thickener/ dispersant)

If necessary, the positive electrode mixture may further comprise a thickener and/or a dispersant and the like. In an example embodiment, the positive electrode mixture may comprise a thickener such as carboxymethyl cellulose (CMC).

[Negative electrode]

The negative electrode may comprise a negative electrode current collector and a negative electrode mixture layer disposed on at least one surface of the negative electrode current collector.

(Negative electrode current collector)

A non-limiting example of the negative electrode current collector may comprise a copper foil, a nickel foil, a stainless steel foil, a titanium foil, a nickel foam, a copper foam, a polymer substrate coated with a conductive metal, and the like. The negative electrode current collector is not limited, but may be, for example, 10 to 50 μm.

(Negative electrode material)

The negative electrode mixture layer may comprise a negative electrode active material. As the negative electrode active material, a material capable of adsorbing or desorbing lithium ions may be used. For example, the negative electrode active material may be carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may comprise hard carbon, soft carbon, coke, mesocarbon microbead (MCMB), mesophase pitch-based carbon fiber (MPCF), and others.

An example of the crystalline carbon may comprise graphite-based carbon such as natural graphite, artificial graphite, graphitized coke, graphitized MCMB, and graphitized MPCF.

The lithium metal may comprise a pure lithium metal or a lithium metal on which a protective layer is formed for suppressing dendrite growth. In an example embodiment, a lithium metal-containing layer which is deposited or coated on a negative electrode current collector may be used as a negative electrode active material. In an example embodiment, a lithium thin film layer may be used as a negative electrode active material layer.

An element comprised in the lithium alloy may comprise aluminum, zinc, bismuth, cadmium, antimony, silicon, lead, tin, gallium, indium, or the like.

The silicon-containing material may provide a more increased capacity characteristic. The silicon-containing material may comprise Si, $SiO_x$ ($0<x<2$), metal-doped $SiO_x$ ($0<x<2$), a silicon-carbon composite, and the like. The metal may comprise lithium and/or magnesium, and the metal-doped $SiO_x$ ($0<x<2$) may comprise metal silicate.

(Method for manufacturing negative electrode)

For example, the negative electrode active material may be mixed into the solvent to prepare a negative electrode slurry. After coating/depositing the negative electrode current collector with the negative electrode slurry, drying and rolling may be performed to manufacture a negative electrode mixture layer. The coating process may be performed by a method such as gravure coating, slot die coating, multilayer simultaneous die coating, imprinting, doctor blade coating, dip coating, bar coating, and casting, and is not limited thereto. The negative electrode mixture layer may further comprise a binder, and may optionally further comprise a conductive material, a thickener, and the like.

In some example embodiments, the negative electrode may comprise a negative electrode active material layer in a lithium metal form formed by a deposition/coating process.

(Negative electrode solvent)

A non-limiting example of the solvent for a negative electrode mixture may comprise water, pure water, deionized water, distilled water, ethanol, isopropanol, methanol, acetone, n-propanol, t-butanol, and the like.

(Negative electrode binder/ conductive material/ thickener)

As the binder, the conductive material, and the thickener, the materials described above which may be used in the manufacture of a positive electrode may be used.

In some example embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as a negative electrode binder.

[Electrode assembly]

According to example embodiments, the positive electrode, the negative electrode, and the separator may be repeatedly disposed to form an electrode assembly. In some example embodiments, the electrode assembly may be a winding type, a stacking type, a zigzag (z)-folding type, or a stack-folding type.

[Electrolyte]

A lithium secondary battery may be defined by housing the electrode assembly in a case with an electrolyte. According to example embodiments, a nonaqueous electrolyte solution may be used as the electrolyte.

(Lithium salt/ organic solvent)

A nonaqueous electrolyte solution comprises a lithium salt as an electrolyte and an organic solvent, the lithium salt is represented by, for example, $Li^+X^-$, and an example of an anion ($X^-$) of the lithium salt may comprise $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and the like.

The organic solvent has sufficient solubility of the lithium salt or the additive, and may comprise an organic compound having no reactivity in a battery. The organic solvent may comprise, for example, at least one of carbonate-based solvents, ester-based solvents, ether-based solvents, ketone-based solvents, alcohol-based solvents, and aprotic solvents. An example of the organic solvent may comprise propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethylsulfoxide, acetonitrile, dimethoxyethane, sulfolane, gamma-butyrolactone, propylene sulfite, and the like. These may be used alone or in combination of two more.

(Additive)

The nonaqueous electrolyte solution may further comprise an additive. The additive may comprise, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds. The cyclic carbonate-based compound may be vinylene carbonate (VC), vinylethylene carbonate (VEC), or the like. The fluorine-substituted cyclic carbonate-based compound may comprise fluoroethylene carbonate (FEC) and the like. The sultone-based compound may comprise 1,3-propane sultone, 1,3-propene sultone, 1,4-butane sultone, and the like. The cyclic sulfate-based compound may comprise 1,2-ethylene sulfate, 1,2-propylene sulfate, and the like. The cyclic sulfite-based compound may comprise ethylene sulfite, butylene sulfite, and the like. The phosphate-based compound may comprise lithium difluoro bis-oxalato phosphate, lithium difluoro phosphate, and the like. The borate-based compound may comprise lithium bis(oxalate) borate and the like.

Hereinafter, the examples and the experimental examples will be illustrated specifically in detail in the following. However, since the examples and the experimental examples described later only illustrate a part of one example embodiment, the technology described in the present specification should not be construed as being limited thereto.

**<Experimental method>**

1. X-ray diffraction (XRD) analysis

XRD analysis conditions were as follows.

X-ray source anode: Cu K$\alpha$ (1.5406 Å)
Generator voltage: 45 kV, tube current: 40 mA
Scan 2$\Theta$ range: 10-80°
Step size: 0.02626°
Time per Scan: 100 s

2. Measurement of air permeability

Air permeability (Gurley permeability) of the porous substrate was measured in accordance with ASTM D726 using Densometer (Toyoseiki Ltd.), and a time it took for 100 cc of air to pass an area of 1 in$^2$ of the separator was recorded as a second unit.

3. Measurement of heat shrinkage rate

A manufactured separator was cut into a square shape having a side of 10 cm, a sample was placed right in the center, 5 sheets of paper were put on and under the sample, respectively, and the four sides of the paper were wrapped with tape. The sample wrapped with paper was allowed to stand in a hot air oven at a temperature of 130°C for 60 minutes. Thereafter, the sample was taken out, and a shrinkage in the machine direction (MD) of the following Mathematical Formula 1 was measured and evaluated as OK when it was less than 5% and as NG when it was 5% or more.

-->Shrinkage rate in MD (%) = (length in MD before heating - length in MD after heating) $\times$ 100 / length in MD before heating    Mathematical Formula 1

4. Measurement of moisture content

0.3 g of the manufactured separator was collected, and a moisture amount occurring while heating the specimen at 150°C was measured according to a Karl Fischer moisture measurement method, using a moisture meter (Metrohm, 917 Coulometer) and evaluated as OK when the measured content was less than 1000 ppm and as NG when it was 1000 ppm or more.

5. Measurement of weight average molecular weight

Measurement of weight average molecular weight was performed by using GPC (EcoSEC HLC-8320 GPC Reflective Index detector from Tosoh Corporation) using TSKgel guard PWx, two columns of TSKgel GMPWxl and TSKgel G2500PWxl ($7.8 \times 300$ mm) as a GPC column, a 0.1 M aqueous $NaNO_3$ solution as a developing solvent, and polyethylene glycol as a standard, and performing analysis at 40°C at a flow rate of 1 mL/min.

6. Measurement of thickness

Thickness of separator: The separators were overlapped in 10 layers, each thickness was measured at 5 random points in the transverse direction with a thickness meter available from Mitutoyo, an average thickness of a 10-layer separator was derived, and the value was divided by 10 again to derive an overall average thickness of a single separator.
Thickness of porous substrate: The average thickness of the porous substrate was derived by stacking (or overlapping) only the porous substrate in 10 layers, measuring the thickness at 5 random points in the transverse direction with a thickness meter available from Mitutoyo, deriving the average thickness of the 10-layer porous substrate, and dividing it by 10 again.
Thickness of inorganic particle layer: The average thickness was derived as a value calculated by subtracting an average thickness of the single porous substrate from the entire average thickness of the single separator determined by the method described above.

### <Example 1>

A 1.0 L flask was replaced with nitrogen, and 64.7 g of acrylamide, 10.4 g of 2-hydroxyethylacrylate, 0.008 g of N-methylenebisacrylamide, and 676 g of distilled water were added to the flask and then heated to 70°C. Thereafter, 0.200 g of potassium persulfate as a polymerization initiator was added to the flask, and a polymerization reaction was performed. 15 hours after the reaction, the flask was exposed to the air to stop the polymerization reaction, the temperature was lowered to room temperature, and a 1 M sodium hydroxide solution was added to adjust pH to 7, thereby preparing a binder aqueous solution having a solid content of 10 wt%. At this time, the aqueous solution had a viscosity of 1000 cps and a weight average molecular weight of about 280,000 g/mol.
Am amount of 15 g of boehmite particles (A) having an average particle diameter ($D_{50}$) of 400 nm and 35 g of boehmite particles (B) having an average particle diameter ($D_{50}$) of 700 nm were added to 50 g of distilled water comprising 0.35 g of ammonium polycarbonate, and stirring was performed for 2 hours to prepare a mixed solution. An amount of 100 g of the mixed solution and 100 g of a zirconium ball were added to a zirconium ball, milling was performed at 150 rpm for 5 minutes using a planetary mixer, and then filtration was performed using a mesh filter to prepare an inorganic slurry. At this time, as a result of measurement using a particle size meter in a manner of laser diffraction spectrometry (LDS), $D_{50}$ was 0.4 um.
An amount of 7.73 g of the binder prepared above and 45 g of additional water were added to 50 g of the inorganic slurry. Then stirring was performed for 30 minutes to prepare a coating solution having a solid content of 25 wt%.
A polyethylene substrate having a thickness of 9 um (Gurley permeability: 126 s/100 cc) as a porous substrate was corona-treated in a 0.6 A condition. The coating solution prepared above was coated on both surfaces of the porous substrate at a speed of 5 m/min to form an inorganic particle layer. Then, drying was performed by passing the coated substrate through a hot air dryer to wind it in a roll shape, thereby manufacturing a separator. Each coating thickness after drying was 1.5 um.

### <Examples 2 to 6>

Separators were manufactured in the same manner as in Example 1, except that the average particle diameters ($D_{50}$) of inorganic particles A and B, the weight ratio of the inorganic particles, the thickness of the inorganic particle layer, the thickness of the porous substrate, and the Gurley permeability of the porous substrate were as shown in the following Table 1.

### <Comparative Examples 1 to 3>

Separators were manufactured in the same manner as in Example 1, except that the average particle diameters ($D_{50}$) of inorganic particles A and B, the weight ratio of the inorganic particles, the thickness of the inorganic particle layer, the thickness of the porous substrate, and the Gurley permeability of the porous substrate were as shown in the following Table 1.

[Table 1]

| | Average particle diameter (D50) of inorganic particles ($\mu$m) | | Weight ratio of inorganic particle (A: B) | Thickness of inorganic particle layer ($\mu$m) | Thickness of porous substrate ($\mu$m) | Gurley permeability (s/100 c) of porous substrate |
|---|---|---|---|---|---|---|
| | A | B | | | | |
| Example 1 | 0.4 | 0.7 | 30:70 | 1.5/1.5 | 9 | 126 |
| Example 2 | 0.4 | 0.7 | 30:70 | 3.0/3.0 | 11 | 140 |
| Example 3 | 0.4 | 0.7 | 80:20 | 1.5/1.5 | 9 | 126 |
| Example 4 | 0.2 | 0.7 | 50:50 | 2.0/2.0 | 9 | 75 |
| Example 5 | 0.4 | 1.2 | 10:90 | 1.5/1.5 | 9 | 75 |
| Example 6 | - | 0.7 | - | 1.0/1.0 | 9 | 126 |
| Comparative Example 1 | - | 1.2 | - | 2.0/2.0 | 9 | 126 |
| Comparative Example 2 | 0.2 | - | - | 2.0/2.0 | 11 | 140 |
| Comparative Example 3 | - | 1.0 | - | 1.0/1.0 | 9 | 150 |

XRD measurement of the separators manufactured in the examples and the comparative examples, the intensity (1(020), I(110)) of the peaks corresponding to the (020) plane and the (110) plane, and a ratio ($I_{020/110}$) thereof, and the results of measuring the heat shrinkage rate and the moisture content of the separators are summarized in the following Table 2:

[Table 2]

| | I(020) | I(110) | $I_{020/110}$ | Heat shrinkage rate | Moisture content |
|---|---|---|---|---|---|
| Example 1 | 88428 | 17583 | 5.0 | OK | OK |
| Example 2 | 96631 | 19671 | 4.9 | OK | OK |
| Example 3 | 49375 | 17467 | 2.8 | OK | OK |
| Example 4 | 46364 | 10850 | 4.3 | OK | OK |
| Example 5 | 52074 | 10003 | 5.2 | OK | OK |
| Example 6 | 82351 | 14383 | 5.7 | OK | OK |
| Comparative Example 1 | 85640 | 10969 | 7.8 | NG | OK |
| Comparative Example 2 | 27651 | 10978 | 2.5 | OK | NG |
| Comparative Example 3 | 118752 | 20156 | 5.9 | NG | OK |

According to the above XRD results, the peak corresponding to the (020) plane is a peak of boehmite which was inorganic particles comprised in the inorganic particle layer, and the peak corresponding to the (110) plane was a peak of polyethylene which was a porous substrate. The separators of the examples having the intensity ratio of the two peaks $I_{020/110}$ of 2.6 to 5.7 all satisfied the heat shrinkage rate at 130°C of less than 5%, and had excellent stability at high temperature as compared with the comparative examples. In addition, as a result of evaluating the heat shrinkage rate by raising the temperature to 150°C using the separators of Examples 1 and 2 and Comparative Examples 1 to 3, both Examples 1 and 2 still satisfied the heat shrinkage rate of less than 5%, but Comparative Examples 1 to 3 were all confirmed to have the heat shrinkage rate of 5% or more.

In addition, considering that the separators of the examples all had a moisture content of less than 1000 ppm, but the separator of Comparative Example 4 had a high moisture content of 1000 ppm or more, it is expected that battery performance degradation would be caused by the side reaction due to moisture during battery charge and discharge.

The present disclosure relates to a separator having an intensity ratio of peaks corresponding to the (020) plane and the (110) plane in an X-ray diffraction (XRD) analysis graph of 2.6 to 5.7. The separator according to an example embodiment has excellent stability at high temperature by satisfying the peak intensity ratio of the XRD analysis graph.

Hereinabove, though one embodiment has been described in detail by the examples and the experimental examples, the scope of an example embodiment is not limited to specific examples, and should be construed by the appended claims.

## Claims

1. A separator for an electrochemical device, comprising: a porous substrate; and an inorganic particle layer comprising inorganic particles on at least one surface of the porous substrate,

   wherein a peak intensity ratio $I_{020/110}$ represented by the following Equation 1 is 2.6 to 5.7:

   $$[\text{Equation 1}]$$

   $$I_{020/110} = I(020)/I(110)$$

   wherein I(020) and I(110) are intensities of peaks corresponding to a (020) plane and a (110) plane in an X-ray diffraction (XRD) analysis graph.

2. The separator of claim 1, wherein the peak corresponding to the (020) plane is a peak of the inorganic particles comprised in the inorganic particle layer.

3. The separator of claim 1 or 2, wherein the peak corresponding to the (110) plane is a peak of the porous substrate.

4. The separator of any one of claims 1 to 3, wherein the peak of the (020) plane is shown at $2\theta=14.5°\pm0.5°$, and/or wherein the peak of the (110) plane is shown at $2\theta=21.6°\pm0.5°$.

5. The separator of any one of claims 1 to 4, wherein $I_{020/110}$ is 2.8 to 5.7.

6. The separator of any one of the preceding claims, wherein the inorganic particles comprise one or more selected from the group consisting of boehmite, $BaSO_4$, $CeO_2$, MgO, CaO, ZnO, $Al_2O_3$, $TiO_2$, $BaTiO_3$, $HfO_2$, $SrTiO_3$, $SnO_2$, NiO, $ZrO_2$, $Y_2O_3$, and SiC, preferably is boehmite.

7. The separator of any one of claims 1 to 6, wherein the inorganic particle layer further comprises a binder, preferably, wherein the binder comprises any one or more selected from the group consisting of ester-based polymers, amide-based polymers, imide-based polymers, acryl-based polymers, acrylamide-based polymers, vinylalcohol-based polymers, fluorine-based polymers, and vinylpyrrolidone-based polymers.

8. The separator of claim 7, wherein the binder is comprised at 0.1 parts by weight of 20.0 parts by weight with respect to 100 parts by weight of the inorganic particles.

9. The separator of any one of claims 1 to 8, wherein the inorganic particles have an average particle diameter (D50) of 0.1 um to 10.0 $\mu$m, or 0.1 um to 5.0 um, or 0.1 um to 3.0 um, or 0.1 um to 1.5 $\mu$m.

10. The separator of any one of claims 1 to 9, wherein the inorganic particles comprise a mixture of one or more types of inorganic particles, wherein the one or more types of inorganic particles differ by having average particle diameters ($D_{50}$) different from each other, optionally, wherein the inorganic particles are a mixture of inorganic particles having an average particle diameter ($D_{50}$) of 0.10 $\mu$m to 0.54 $\mu$m or 0.20 um to 0.40 um, and inorganic particles having an average particle diameter of 0.55 $\mu$m to 2.0 $\mu$m or 0.55 $\mu$m to 1.5 $\mu$m.

11. The separator of any one of claims 1 to 10, wherein the inorganic particle layer has a thickness of 0.1 $\mu$m to 10.0 um, and/or wherein the porous substrate has a thickness of 1 $\mu$m to 50 $\mu$m.

12. The separator of any one of claims 1 to 11, wherein the separator has a shrinkage rate in the machine direction (MD) after being allowed to stand at 130°C for 60 minutes of 5.0% or less, and/or wherein the porous substrate has a Gurley permeability in accordance with ASTM D726 of 50 s/100 cc to 200 s/100 cc.

13. A method for producing a separator, comprising the steps of:

providing a porous substrate,
applying a slurry comprising inorganic particles to one or both of the surface (s) of the porous substrate in order to provide inorganic particle layer(s) on one or both sides of the porous substrate, respectively;
wherein the crystal structures of the inorganic particles in the inorganic particle layer and of the crystal structure of the polymer in the porous substrate of the obtained separator are to satisfy a peak intensity ratio I020/110 represented by the following Equation 1 to be 2.6 to 5.7:

$$[\text{Equation 1}]$$

$$I_{020/110} = I(020)/I(110)$$

wherein I(020) and I(110) are intensities of peaks corresponding to a (020) plane and a (110) plane in an X-ray diffraction (XRD) analysis graph.

14. The method for producing a separator according to claim 13 for manufacturing a secondary battery, wherein the manufacturing conditions for obtaining the peak intensity ratio $I_{020/110}$ are selected from one or more of the following conditions, respectively alone or in combination:

type of the porous substrate;
content and type of a binder, of a dispersant, and/or of a lubricant;
solid content of the slurry on the porous substrate;
rotation speed and/or bead size in a slurry preparation step; use or absence of a smoothing bar when applying the slurry;
coating speed;
drying temperature;
type of the electrolyte suitable for a battery;
type of inorganic materials comprised in the inorganic particle layer, selected from: temperature or pressure of the manufacturing process from which the inorganic particles derive, preselection of known or commercial inorganic particle materials, average particle diameter and/or distribution of particle size, and/or weight ratio of different types of inorganic particles;
type and manufacturing conditions of the polymer used for the porous substrate, selected from a preselection of known or commercial polymers, an elongation rate and/or a copolymerization rate in the manufacturing process from which the porous substrate derives; and
thickness of the inorganic particle layer and/or of the porous substrate.

15. An electrochemical device comprising the separator according to any one of claims 1 to 12, optionally wherein the electrochemical device is a secondary battery.

Fig. 1